# EUROPÄISCHE PATENTSCHRIFT

(11) **EP 0 557 241 B1**
(45) Veröffentlichungstag und Bekanntmachung des Hinweises auf die Patenterteilung: **05.07.1995**
(21) Anmeldenummer: 93810019.5
(22) Anmeldetag: 14.01.1993
(51) Int. Cl.: E02D 5/74, E01F 7/04, F16G 11/00, D07B 1/18

(54) **Spiraldrahtseilanker, insbesondere zur Verankerung von Steinschlag- und Lawinenschutzsystemen**
Wire cable anchor, in particular for anchoring protection systems against rockfall or avalanches
Ancrage pour câble métallique, notamment applicable dans des systèmes protecteurs contre les chutes pierres ou avalanches

(30) Priorität: 18.02.1992 CH 484/92
(43) Veröffentlichungstag der Anmeldung: 25.08.1993
(73) Patentinhaber: FATZER AG, CH-8590 Romanshorn (CH)
(72) Erfinder: Popp, Xaver, CH-9308 Lömmenschwil (CH); Loepfe, Theo, CH-9312 Häggenschwil (CH)
(74) Vertreter: Bosshard, Ernst

(56) Entgegenhaltungen:
- CH-A- 672 934
- GB-A- 574 236
- US-A- 3 122 806
- US-A- 3 310 333
- US-A- 4 760 991

## Beschreibung

Die Erfindung bezieht sich auf einen Spiraldrahtseilanker, insbesondere zur Verankerung von Steinschlag- und Lawinenschutzsystemen, mit einer Schlaufe und einem im Erdreich zu befestigenden Teil.

Es sind bereits Felsanker bekannt (CH-A-672 934), bei denen das eine Ende im Erdreich, beispielsweise im Fels fest verankert ist und das aus dem Erdreich herausragende andere Ende mit einer Schlaule versehen ist, an welcher Stahldrahtnetze od. dgl. zur Sicherung gegen Steinschlag oder Schneerutschungen einhängbar sind.
Bei derartigen Felsankern besteht ein Problem der Langzeit-Korrosionsfestigkeit, da solche Anker über Jahre oder sogar Jahrzehnte der Witterung ausgesetzt sind. Die üblichen Schutzvorkehnrungen gegen Korrosion, wie die Verwendung galvanisierter Stahldrähte zur Bildung des Drahtseiles haben sich als ungenügend erwiesen. Bei Richtungsänderung der Krafteinwirkung, beispielsweise unter Schneebelastung oder Längenänderungen infolge Temperaturschwankungen der angehängten Schutznetze bewirkt dies eine Bewegung des Seilankers. Dadurch wird in dem aus dem Boden herausragenden Bereich das Ankerseil unter Wirkung der Wechsellast bewegt. In diesem bodennahen Bereich ist die Umgebung besonders korrosionsfördernd (Sauerstoff, Wasser, Wärme, saurer Boden). Dies führt schliesslich zu Korrosionsschäden und damit zu einer Festigkeitsminderung der Drähte, was mit fortschreitender Dauer bewirkt, dass solche Felsanker die ihnen zugedachte Aufgabe nicht mehr erfüllen können.

Mit der Erfindung soll die Aufgabe gelöst werden, einen Spiraldrahtseilanker mit wesentlich verbessertem Langzeit-Korrosionsverhalten zu schaffen, bei vergleichsweise geringem Mehraufwand.

Die Erfindung, mit der diese Aufgabe gelöst wird, ist dadurch gekennzeichnet, dass über das freie Drahtseilende ein Kunststoffrohr gestülpt ist, welches sich zumindest über den die Schlaufe bildenden Seilbereich erstreckt und mindestens im Bereich der Schlaufe über dem Kunststoffrohr ein entsprechend der Schlaufenform gebogenes metallisches Hüllrohr vorhanden ist.

Dadurch ist es möglich, die Langzeit-Korrosionsbeständigkeit solcher Spiraldrahtseilanker nachhaltig zu verbessern. Das Drahtseil wird durch das Kunststoffrohr gegen Witterungseinflüsse geschützt. Andererseits bewirkt das über das Kunststoffrohr gesteckte metallische Hüllrohr, dass Reibbewegungen des von der Schlaufe abgestützten Gehänges das Drahtseil nicht beschädigen können.

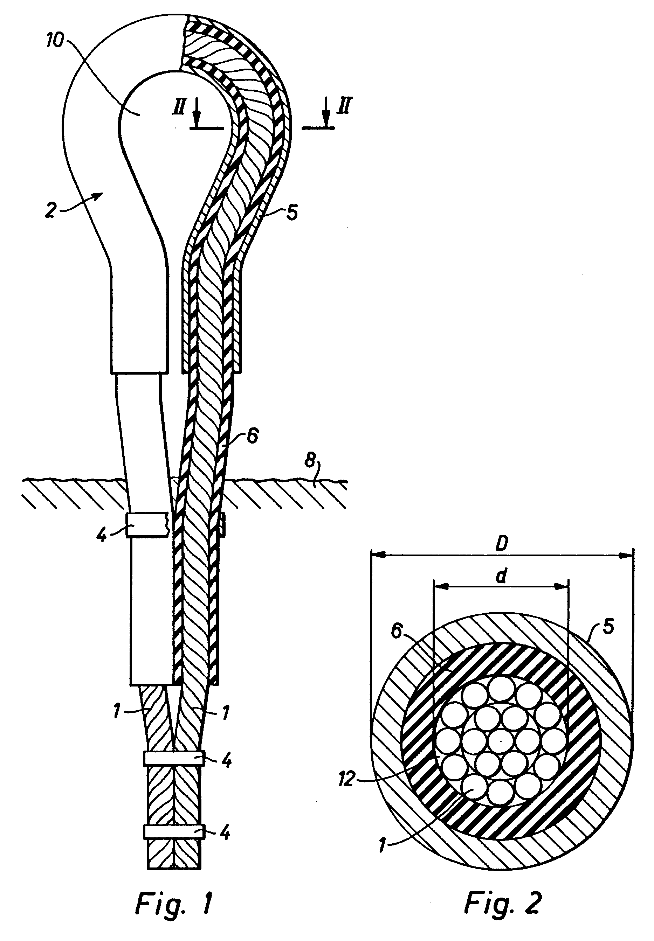

In der Zeichnung ist ein Ausführungsbeispiel des Erfindungsgegenstandes dargestellt. Es zeigen:
- Fig. 1: eine Ansicht eines Spiraldrahtseilankers, teilweise im Schnitt
- Fig. 2: einen Schnitt nach der Linie II-II in Fig. 1
Zur Verankerung von Steinschlag- und Lawinenschutzsystemen werden Spiraldrahtseilanker verwendet. Das eine Ende derselben wird im Fels beziehungsweise Erdreich 8 in an sich bekannter Weise fest verankert. Das andere Ende solcher Spiraldrahtseilanker enthält eine Schlaufe 2. Da solche Drahtseilankersysteme üblicherweise über lange Zeiträume der Witterung ausgesetzt sind, müssen Vorkehrungen getroffen werden, um Korrosionsschäden, namentlich im Boden-Luftbereich möglichst zu verhindern zur Aufrechterhaltung einer langen, intakten und ungeschwächten Gebrauchsdauer. Zu diesem Zwecke wird über das freie Drahtseilende ein Kunststoffrohr 6 gestülpt, das sich über den ganzen Bereich der Schlaufe 2 und über den anschliessenden geraden in das Bohrloch hineinragenden Bereich erstreckt, wie dies aus Fig. 1 hervorgeht. Zur Verhinderung von Kondenswasser und um einen möglichst guten luft- und wasserdichten Abschluss zu erreichen, wird das Kunststoffrohr 6 zusätzlich mit einer Korrosionsschutzmasse, beispielsweise Fett oder Zinkstaubmasse gefüllt, welche dei Hohlräume zwischen der Innenseite des Kunststoffrohres und dem Drahtseil 1 möglichst gut ausfüllt. Ueber dieses Kunststoffrohr wird sodann ein metallisches Hüllrohr 5 gesteckt, das die gebogene Schlaufenform annimmt. Die sich an die Schlaufe 2 anschliessenden beiden angenähert geraden Drahseilteilstücke werden durch mehrere Klammern 4 zusammengehalten. Diese Drahtseilteilstücke verlaufen mindestens in ihrem im Erdreich 8 befindlichen Bereich zueinander parallel. Das durch die Schlaufenöffnung 10 hindurchgezogene Gehänge, Netz od. dgl. liegt somit auf dem metallischen Hüllrohr 5 auf und eine allfällige Reibung bewirkt keine Beschädigung der Korrosionsschicht des Spiraldrahtseiles.

Das metallische Hüllrohr 5 besteht beispielsweise aus einem verzinkten oder rostfreien Stahlrohr.

Das Kunststoffrohr 6 besteht vorzugsweise aus Polyaethylen und ist relativ dickwandig ausgeführt, es könnte indessen auch schlauchartig ausgebildet sein.
Das metallische Hüllrohr 5 und das Kunststoffrohr 6 haben vorzugsweise angenähert die gleiche Wandstärke. Der Aussendurchmesser D des Spiraldrahtseilankers über das Hüllrohr 5 gemessen, hat vorzugsweise etwa den doppelten Durchmesser d des Drahtseiles 1.

## Patentansprüche

1. Spiraldrahtseilanker, insbesondere zur Verankerung von Steinschlag- und Lawinenschutzsystemen, mit einer Schlaufe und einem im Erdreich zu befestigenden Teil, dadurch gekennzeichnet, dass über das freie Drahtseilende ein Kunststoffrohr (6) gestülpt ist, welches sich zumindest über den die Schlaufe (2) bildenden Seilbereich erstreckt und mindestens im Bereich der Schlaufe (2) über dem Kunststoffrohr (6) ein entsprechend der Schlaufenform gebogenes metallisches Hüllrohr (5) vorhanden ist.

2. Spiraldrahtseilanker nach Anspruch 1, dadurch gekennzeichnet, dass sich das Kunststoffrohr (6) bis in den in das Erdreich (8) einzusetzenden Bereich erstreckt.

3. Spiraldrahtseilanker nach Anspruch 1 oder 2, dadurch gekennzeichnet, dass die Hohlräume (12) zwischen Kunststoffrohr (6) und Drahtseil (1) mit einer Korrosionsschutzmasse, insbesondere Silikon oder Zinkstaubmasse gefüllt sind.

4. Spiraldrahtseilanker nach einem der Ansprüche 1-3, dadurch gekennzeichnet, dass das Kunststoffrohr (6) und das Hüllrohr (5) mindestens angenähert die gleiche Wandstärke haben.

5. Spiraldrahtseilanker nach einem der Ansprüche 1-4, dadurch gekennzeichnet, dass der Aussendurchmesser über das Hüllrohr (5) gemessen, angenähert dem doppelten Durchmesser des Drahtseiles (1) entspricht.

## Claims

1. Wire cable anchor, in particular for anchoring protection systems against rockfall and avalanches, having a loop and a portion to be secured in the ground, characterized in that a plastic pipe (6) is inverted over the free end of the wire cable and extends at least over the region of the cable forming the loop (2), and a metal sleeve pipe (5), bent to conform to the shape of the loop, is present over the plastic pipe (6) at least in the region of the loop (2).

2. Wire cable anchor according to Claim 1, characterized in that the plastic pipe (6) extends into the region to be inserted into the ground (8).

3. Wire cable anchor according to Claim 1 or 2, characterized in that the cavities (12) between the plastic pipe (6) and the wire cable (1) are filled with a corrosion protection compound, in particular silicon or zinc dust compound.

4. Wire cable anchor according to one of Claims 1 to 3, characterized in that the plastic pipe (6) and the sleeve pipe (5) have at least approximately the same wall thickness.

5. Wire cable anchor according to one of Claims 1 to 4, characterized in that the external diameter, measured over the sleeve pipe (5), corresponds approximately to twice the diameter of the wire cable (1).

## Revendications

1. Ancrage pour câble métallique torsadé utilisé notamment dans les systèmes protecteurs contre les chutes de pierres ou les avalanches, comportant un oeillet et une partie à fixer dans le sol, caractérisé en ce qu'un tube en matière plastique (6) est enfilé sur l'extrémité libre du câble en acier, tube qui s'étend au moins dans la zone du câble formant l'oeillet (2), en ce qu'il existe au moins dans la zone de l'oeillet 2 sur le tube de matière plastique (6) une enveloppe tubulaire métallique (5) cintrée ayant la forme de l'oeillet.

2. Ancrage pour câble métallique torsadé suivant la revendication 1, caractérisé en ce que le tube en matière plastique (6) s'étend jusqu'à la zone à enfoncer dans le sol (8).

3. Ancrage pour câble métallique torsadé suivant l'une quelconque des revendications 1 ou 2, caractérisé en ce que les interstices vides (12) entre le tube en matière plastique (6) et le câble en acier (1) sont remplis avec une masse de protection contre la corrosion en particulier une masse à base de silicone ou de poussière de zinc.

4. Ancrage pour câble métallique torsadé suivant l'une quelconque des revendications 1 à 3, caractérisé en ce que le tube en matière plastique (6) et l'enveloppe tubulaire (5) ont au moins approximativement la même épaisseur de paroi.

5. Ancrage pour câble métallique torsadé suivant l'une quelconque des revendications 1 à 4, caractérisé en ce que le diamètre extérieur pris sur l'enveloppe tubulaire (5) correspond sensiblement au double du diamètre du câble (1) en acier.
